# EUROPEAN PATENT APPLICATION

(11) **EP 0 550 209 A2**
(43) Date of publication of application: **07.07.1993**
(21) Application number: 92311459.9
(22) Date of filing: 15.12.1992
(51) Int. Cl.: C08G 65/44, C08G 65/48, C08L 71/12, C08L 67/00

(54) **Polyphenylene ether resins**

(30) Priority: 31.12.1991 US 816328
(71) Applicant: GENERAL ELECTRIC COMPANY, Schenectady, NY 12345 (US)
(72) Inventor: Aycock, David Frederick, Glenmont, New York 12077 (US); Dert, Vincent, Guilderland, New York 12084 (US)
(74) Representative: Pratt, Richard Wilson

(57) **Abstract**

A method for the preparation of polyphenylene ether resins having increased hydroxyl content and, particularly, increased non-Mannich hydroxyl content comprises reaction of biphenol with polyphenylene ether resin. Polyphenylene ether resins obtained by such method, as well as the reaction products between such polyphenylene ether resins and hydroxyl-reactive substituents, such as epoxy chlorotriazines, and compositions containing such reaction products and thermoplastic resins not normally compatible with polyphenylene ether resin, such as polyester resin are also disclosed.

## Description

### FIELD OF THE INVENTION

The present invention relates to polyphenylene ether resins having increased hydroxyl content, methods for the preparation of polyphenylene ether resins having increased hydroxyl content, reaction products of the polyphenylene ether resins having increased hydroxyl content and capping agents which are reactive with the hydroxyl group of such polyphenylene ether resins, and compositions containing such reaction products. More particularly, the present invention relates to polyphenylene ether resins having increased hydroxyl end groups resulting from reaction with biphenols, reaction products comprised of epoxy triazine end-capped polyphenylene ether resins, and compositions comprised of such reaction products with polyester resins.

### BACKGROUND OF THE INVENTION

The polyphenylene ethers are a widely used class of thermoplastic engineering resins characterized by excellent hydrolytic stability, dimensional stability, toughness, heat resistance and dielectric properties. However, they are deficient in certain other properties such as processability and solvent resistance. Therefore, there is a continuing search for means for modifying polyphenylene ethers in order to improve these other properties.

It is known that the hydroxyl groups on polyphenylene ether resins can be reacted to form esters or ethers and to thereby incorporate functionality into the polyphenylene ether resin chain.

This type of reaction has been used to introduce: anhydride groups, see, e.g., U.S. Patent No. 4,642,358 and U.S. Patent No. 4,824,915; aryloxytriazine groups, see, e.g.,U.S. Patent No. 4,997,885; epoxy groups, see, e.g., U.S. Patent No. 4,460,743, U.S. Patent No. 4,732,937, and copending, commonly-owned U.S. Patent Application Serial No. 210,266, filed June 23, 1988; and siloxane groups, into polyphenylene ether resins.

These functional groups are intended to react with available functional groups of other polymers and to thereby produce block copolymers. This acts to compatibilize the dissimilar polymers, i.e. the polyphenylene ether resin and the copolymer to be compatibilized therewith. The number of hydroxyl groups, as a weight percent of hydroxyl based on the weight of the polyphenylene ether, limits the amount of reactive agent, i.e. the substituent which contains the functionality, which can be added to polyphenylene ether resin.

The present applicants have now found a process for increasing the level of reactive functionality in polyphenylene ether resins. The process is especially useful for the production of epoxy triazine-capped polyphenylene ether resins. The essential aspect of this process is to further react biphenol groups with polyphenylene ether resins and to thereby increase the concentration of hydroxyl groups available for reaction with the hydroxyl-reactive functionalizing substituent, without substantially altering the molecular weight of the polymer.

The present applicants have also found that the present process provides polyphenylene ether resins having increased hydroxyl functionality which, in turn, exhibit increased reactivity, especially towards epoxy halotriazines. Generally, epoxy halotriazines do not react with all of the hydroxyl groups which are present in polyphenylene ether resin. Specifically, those hydroxyl end groups in polyphenylene ether resins which have an amine group (e.g., dibutylamine (present as a remnant from the polymerization process)) attached to the methylene carbon adjacent to the hydroxyl group, do not react well. These types of hydroxyl groups are referred to herein as Mannich hydroxyl groups. The present invention provides for polyphenylene ether resins having increased hydroxyl functionality but which do not suffer from this short-coming. In other words, the present invention provides for polyphenylene ether resins having increased non-Mannich hydroxyl groups without substantially altering the molecular weight of the polymer.

### SUMMARY OF THE INVENTION

In one of its aspects, therefore, the present invention includes methods for preparing polyphenylene ether resin having increased non-Mannich hydroxyl content wherein the polyphenylene ether resin is polymerized by the oxidative coupling of at least one monohydroxyaromatic compound in solution, said method comprising:
(a) adding all of the monohydroxyaromatic compound at the start of the polymerization;
(b) polymerizing the monohydroxyaromatic compound to substantial completion in the presence of a source of oxygen to form polyphenylene ether;
(c) replacing the source of oxygen with nitrogen; and
(d) reacting the polyphenylene ether with biphenol-containing by-products of the polymerization reaction under conditions which incorporate the biphenol-containing by-products into the polyphenylene ether resin.

In another of its aspects, the present invention includes methods for preparing polyphenylene ether resin having increased non-Mannich hydroxyl content wherein the polyphenylene resin is polymerized by the oxidative coupling of at least one monohydroxyaromatic compound in solution, said method comprising:
(a) adding biphenol to polyphenylene ether resin in solution; and
(b) catalytically reacting the biphenol with the polyphenylene resin in solution.

In another of its aspects, the present invention also includes polyphenylene ether resin having increased non-Mannich hydroxyl content.

In still another of its aspects, the present invention also includes end-capped polyphenylene ether resins wherein the capping agent is preferably epoxy, anhydride, siloxane or aryloxytriazine.

In still another of its aspects, the present invention includes compositions comprised of:
(a) thermoplastic resin normally incompatible with polyphenylene ether resin; and
(b) end-capped polyphenylene ether resin comprised of the reaction product of polyphenylene ether having increased non-Mannich hydroxyl content and a capping agent which is reactive with hydroxyl groups.

### DETAILED DESCRIPTION OF THE INVENTION

The polyphenylene ethers comprise a plurality of structural units having the formula 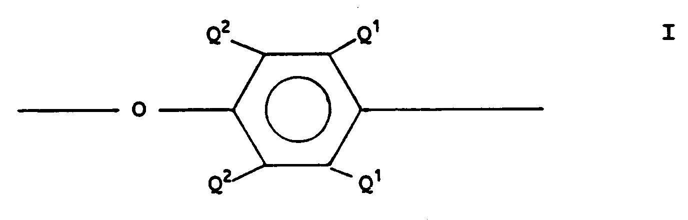
and in each of said units, independently:
each Q¹ is independently halogen, primary or secondary lower alkyl, phenyl, haloalkyl, aminoalkyl, hydrocarbonoxy, or halohydrocarbonoxy wherein at least two carbon atoms separate the halogen and oxygen atoms; and
each Q² is independently hydrogen, halogen, primary or secondary lower alkyl, phenyl, haloalkyl, hydrocarbonoxy or halohydrocarbonoxy as defined for Q¹;
Examples of primary lower alkyl groups suitable as Q¹ and Q² are methyl, ethyl, n-propyl, n-butyl, isobutyl, n-amyl, isoamyl, 2-methyl-butyl, n-hexyl, 2,3-dimethylbutyl, 2-, 3- or 4-methyl-butyl and the corresponding heptyl groups. Examples of secondary lower alkyl groups are isopropyl, sec-butyl and 3-pentyl. Preferably, any alkyl groups are straight-chain rather than branched. Most often, each Q¹ is alkyl or phenyl, especially C₁₋₄ alkyl, and each Q² is hydrogen. Suitable polyphenylene ethers are disclosed in a large number of patents.

Both homopolymer and copolymer polyphenylene ethers are included. Suitable homopolymers are those containing, for example, 2,6-dimethyl-1,4-phenylene ether units. Suitable copolymers include random copolymers containing such units in combination with, for example, 2,3,6-trimethyl-1,4-phenylene ether units. Many suitable random copolymers, as well as homopolymers_{,} are disclosed in the patent literature.

Also included are polyphenylene ethers containing moieties which modify properties such as molecular weight, melt viscosity and/or impact strength. Such polymers are described in the patent literature and may be prepared by grafting onto the polyphenylene ether in known manner such vinyl monomers as acrylonitrile and vinylaromatic compounds (e.g., styrene), or such polymers as polystyrenes and elastomers. The product typically contains both grafted and ungrafted moieties. Other suitable polymers are the coupled polyphenylene ethers in which the coupling agent is reacted in known manner with the hydroxy groups of two polyphenylene ether chains to produce a higher molecular weight polymer containing the reaction product of the hydroxy groups and the coupling agent, provided substantial proportions of free hydroxy groups remain present. Illustrative coupling agents are low molecular weight polycarbonates, quinones, heterocycles and formals. Some of these are described in U.S. Patent No. 4,234,706.

The polyphenylene ether generally has a number average molecular weight within the range of about 3,000-40,000 and a weight average molecular weight within the range of about 20,000-80,000, as determined by gel permeation chromatography. Its intrinsic viscosity is most often in the range of about 0.15-0.6 dl./g., as measured in chloroform at 25°

The polyphenylene ethers are typically prepared by the oxidative coupling of at least one corresponding monohydroxyaromatic compound. Particularly useful and readily available monohydroxyaromatic compounds are 2,6-xylenol (wherein each Q¹ is methyl and each Q² is hydrogen), whereupon the polymer may be characterized as a poly(2,6-dimethyl-1,4-phenylene ether), and 2,3,6-trimethylphenol (wherein each Q¹ and one Q² are methyl and the other Q² is hydrogen).

A variety of catalyst systems are known for the preparation of polyphenylene ethers by oxidative coupling. There is no particular limitation as to catalyst choice and any of the known catalysts can be used. For the most part, they contain at least one heavy metal compound such as a copper, manganese or cobalt compound, usually in combination with various other materials.

A first class of preferred catalyst systems consists of those containing a copper compound. Such catalysts are disclosed, for example, in U.S. Patent Nos. 3,306,874, 3,306,875, 3,914,266 and 4,028,341. They are usually combinations of cuprous or cupric ions, halide (i.e., chloride, bromide or iodide) ions and at least one amine.

Catalyst systems containing manganese compounds constitute a second preferred class. They are generally alkaline systems in which divalent manganese is combined with such anions as halide, alkoxide or phenoxide. Most often, the manganese is present as a complex with one or more complexing and/or chelating agents such as dialkylamines, alkanolamines, alkylenediamines, o-hydroxyaromatic aldehydes o-hydroxyazo compounds, ω-hydroxyoximes (monomeric and polymeric), o-dydroxyaryl oximes and β-diketones. Also useful are known cobalt-containing catalyst systems. Suitable manganese and cobalt-containing catalyst systems for polyphenylene ether preparation are known in the art by reason of disclosure in numerous patents and publications.

Particularly useful polyphenylene ethers for the purposes of this invention are those which comprise molecules having at least one of the end groups of the formulae 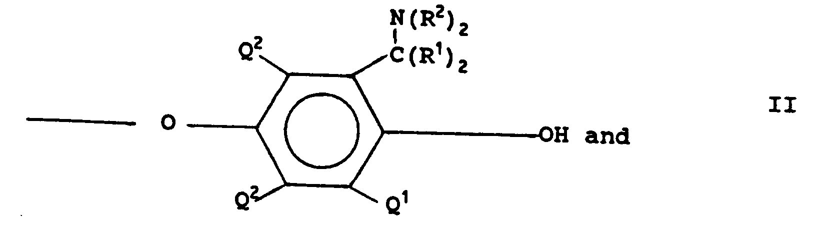 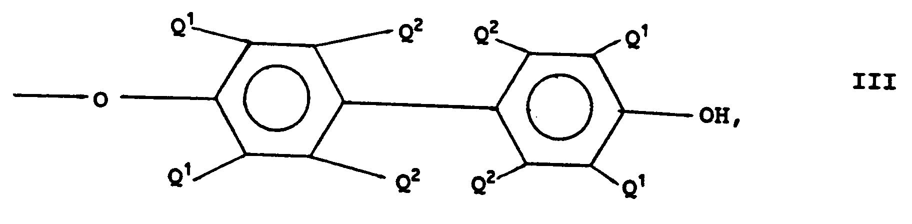
wherein Q¹ and Q² are as previously defined; each R¹ is independently hydrogen or alkyl, with the proviso that the total number of carbon atoms in both R¹ radicals is 6 or less; and each R² is independently hydrogen or a C₁₋₆ primary alkyl radicals. Preferably, each R¹ is hydrogen and each R² is alkyl, especially methyl or n-butyl.

Polymers containing the aminoalkyl-substituted end groups of formula II may be obtained by incorporating an appropriate primary or secondary monoamine as one of the constituents of the oxidative coupling reaction mixture, especially when a copper-or manganese-containing catalyst is used. Such amines, especially the dialkylamines, and preferably di-n-butylamine and dimethylamine, frequently become chemically bound to the polyphenylene ether, most often by replacing one of the x-hydrogen atoms on one or more Q¹ radicals. The principal site of reaction is the Q¹ radical adjacent to the hydroxy group on the terminal unit of the polymer chain. During further processing and/or blending, the aminoalkyl-substituted end groups may undergo various reactions, probably involving a quinone methide-type intermediate of the formula 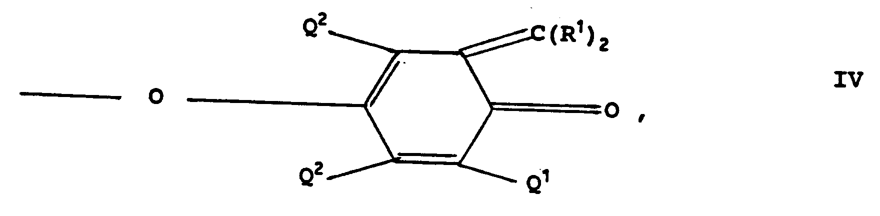
with numerous beneficial effects often including an increase in impact strength and compatibilization with other blend components. U.S. Patent Nos. 4,054,553, 4,092,294, 4,477,649, 4,477,651 and 4,517,341 refer to polyphenylene ether resins having such end group.

Polymers with 4-hydroxybiphenyl end groups of formula III are typically obtained from reaction mixtures in which a by-product diphenoquinone of the formula 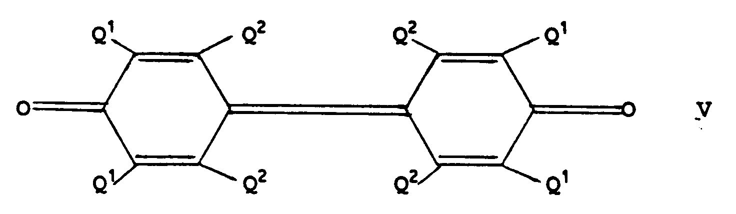
is present, especially in a copper-halide-secondary or-tertiary amine system. In this regard, the disclosure of U.S. Patent No. 4,477,649 is again pertinent as are those of U.S. Patent Nos. 4,234,706 and 4,482,697. In mixtures of this type, the diphenoquinone is said to be ultimately incorporated into the polymer in substantial proportions, largely as an end group.

The present applicants have shown that in the process according to the present invention, the non-Mannich hydroxyl content of polyphenylene ether is increased vis-a-vis commercial polyphenylene ethers, and/or vis-a-vis polyphenylene ethers made by alternative processes.

A particularly suitable end-capping functional group is the epoxy group. Various methods of attaching epoxy groups to polyphenylene ethers have been disclosed. For example, U.S. Patent No. 4,460,743 describes the reaction of a polyphenylene ether with epichlorohydrin; U.S. Patent No. 4,732,937 describes the reaction of polyphenylene ether with terephthaloyl chloride and glycidol; copending, commonly-owned U.S. Patent Application Serial No. 912,705 describes the reaction of polyphenylene ether with various epoxy-functionalized ethylenic monomers such as glycidyl acrylate, glycidyl methacrylate and allyl glycidyl ether in the presence of free radical initiators; and U.S. Patent No. 5,041,504 describes the reaction of polyphenylene ether with epoxychloro-triazines.

Especially preferred as the hydroxyl-reactive substituent according to the presence invention are those capping agents which result in the inclusion of epoxy triazine end groups into the polyphenylene ether resin such as, for example, diglycidyl chlorocyanurate, mesityl glycidyl chlorocyanurate and n-butyl glycidyl chlorocyanurate. Most preferred is the use of mesityl glycidol chlorocyanurate (MGCC) as a capping reagent. These are particularly suitable for use in compatibilizing polyphenylene ether resin compositions which include polyester resin.

Another suitable end-capping functional group bonded to the polyphenylene ether resin chain can be generalized as an acyl-functional group, such as described in U.S. Patent No. 4,824,915, depicted by formula VI: 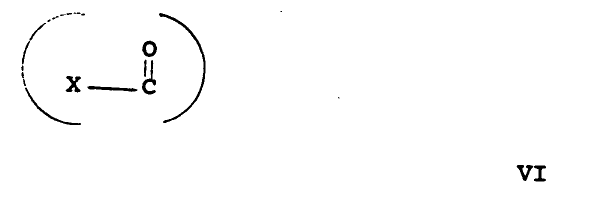
where X is F, Cl, Br, I, OH, 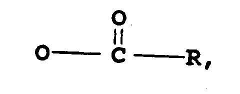
and where R is H or an aliphatic or aromatic radical having less than about 10 carbon atoms. The moiety of formula VI is covalently bonded to a group which is primarily responsible for associating or bonding with the thermoplastic resin normally incompatible with the polyphenylene ether resin of the thermoplastic compositions. Preferably this group is an anhydride group as shown in formula VII 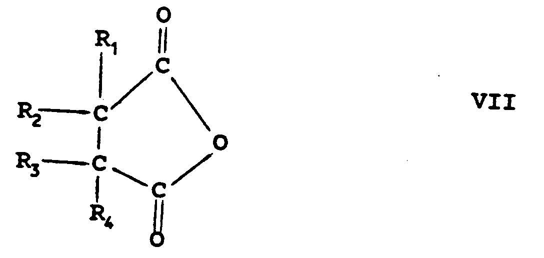
where R₁, R₂, R₃, and R₄ are each, independently, H or an aliphatic or aromatic radical, having, preferably less than about 10 carbon atoms.

Examples of suitable materials falling within the scope of the invention include but are not limited to, the following hydroxyl-reactive substituents: chloroethyanoylsuccinic anhydride; 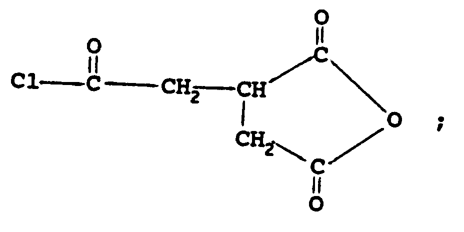
trimellitic anhydride acid chloride, 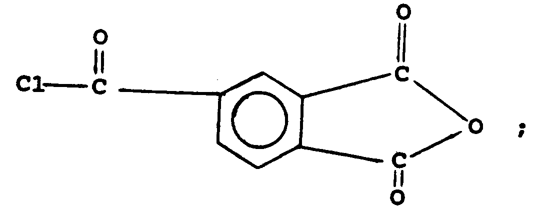
chloroformylsuccinic anhydride, 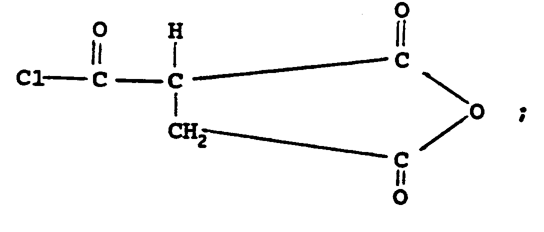
and 1-acetocyacetyl-3,4-dibenzoic acid anhydride, 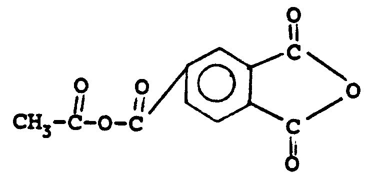
It is contemplated that the acid chloride of terephthalic acid of formula VIII can also be utilized: 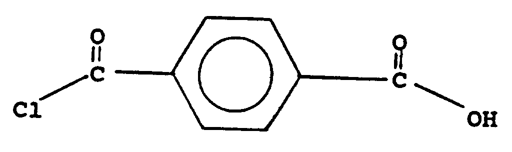
Aryloxytriazine-capped ether compositions may be prepared by contacting, under reactive conditions and in the presence of a basic reagent, at least one polyphenylene ether with an aryloxychlorotriazine of the formula 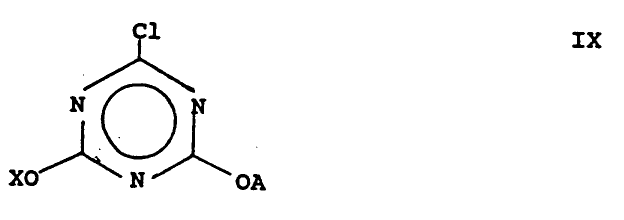
wherein A is an unsubstituted or substituted aromatic radical and X is an alkyl or cycloalkyl radical or an unsubstituted or substituted aromatic radical. Typical aryloxychlorotriazines of formula IX include 2 chloro-4,6-diphenoxy-1,3,5-triazine, 2-chloro-4,6-di(4-t-butyl-phenoxy)-1,3,5-triazine and 2-chloro-4,6-di-(4-methoxy-phenoxy)-1,3,5-triazine. These compounds may also be named as though derived from cyanuric acid and designated diphenyl chlorocyanurate, di-(4-t-butylphenyl) chlorocyanurate and di-(4-methoxyphenyl) chlorocyanurate, respectively. They may be prepared, for example, by the reaction of 2,4,6-trichlorotriazine (cynauric chloride) with the corresponding hydroxyaromatic compounds or sequentially with hydroxyaromatic compounds and aliphatic or alicyclic alcohols. These aryoxytriazines and their preparation are illustrated in U.S. Patent No. 4,997,885.

The most straightforward and commercially attractive way to increase the non-Mannich hydroxyl content of polyphenylene ether according to the process of the present invention is to alter the polyphenylene ether polymerization process such that more diphenoquinone, such as tetramethylidiphenoquinone (TMDQ), is produced and available to be reacted with the polyphenylene ether. It is known that the reaction of TMDQ with polyphenylene ether incorporates a biphenol group into the polyphenylene resin polymer chain, thereby producing a polymer chain with two hydroxyl groups. In the commercial production of polyphenylene ether resin, the reaction conditions are adjusted in order to minimize the production of TMDQ. For example, the 2,6-xylenol monomer is added over a period of time in a batch polymerization process in order to minimize the production of TMDQ. If the monomer is all added at the beginning at the polymerization, the amount of TMDQ increases from about 0.5 to 1.0 weight percent of monomer to about 1.0 to 1.5 weight percent of monomer.

Biphenol groups other than TMDQ can also be reacted with the polyphenylene ether resin in order to increase the non-Mannich hydroxyl content in the polymer chain. Biphenol such as bisphenol A (BPA) or p, p'-biphenol can be reacted with polyphenylene ether resin in solution through the use of a catalyst, such as TMDQ or peroxides.

According to the methods for preparing polyphenylene ether resin having increased non-Mannich hydroxyl content according to the present invention, the reaction between polyphenylene ether resin and the biphenol-containing by-products of the polymerization reaction, or the added biphenol, generally takes place between about as low as 45°C and up to about 100°C, and preferably in the range of 65°C to about 90°C for a time of from about one hour to about five hours.

The polyphenylene ether resins thus obtained show an increased non-Mannich hydroxyl content at a given molecular weight as compared to polyphenylene ether resins prepared by other methods. The molecular weight of polyphenylene ether resins, for comparison purposes, can be presumed to be substantially the same if the intrinsic viscosities are substantially the same. See, e.g., Stevens Polymer Chemistry, Addison-Wesley Pub. Co., Inc., pp. 42-43 (1975). By way of example, the polyphenylene ether resin according to the present invention has a hydroxyl content at an intrinsic viscosity (IV) of .4-.45 of greater than 0.1%, at an IV of .36-.39 of greater than 0.12%, and at an IV of .3-.35 of greater than about 0.15%. Polyphenylene ethers made by conventional processes have hydroxyl contents at an IV of .4-,45 of about 0.075-0.095 and at an IV of .3-.35 of about 0.11-0.14.

Also, when used herein, the terminology "without substantially altering the molecular weight of the polyphenylene ether resin" means that when subject to the processes for increasing the non-Mannich hydroxyl content according to the present invention starting, for example, with a polyphenylene ether resin having on IV of between 0.40-0.45, the IV of the polyphenylene ether resin does not change by more than .1 IV units, preferably does not change by more than .07 IV units, and more preferably does not change by more than 0.05 IV units.

The various aspects of the present invention are illustrated, without limitation, by the following examples.

### DESCRIPTION OF THE PREFERRED EMBODIMENTS

The procedures used in the following examples to measure the % hydroxyl (% OH) in polyphenylene ether resin, and the % mesityl glycidolcyanurate (MGC) incorporated into the polymer, are given below.

The dried polyphenylene ether resin sample is dissolved in dry carbon disulfide (0.025 g/ml concentration) and the infrared absorbance is measured at 3610 cm-1. The concentration of hydroxyl is calculated from the absorbance based upon a standard curve of absorbance versus hydroxyl concentration using the dimer of 2,6-dimethylphenol as a standard.

In order to demonstrate the improvement in hydroxyl concentration versus IV which is achieved by the process according to the present invention, the IV versus % OH values are given below for some polyphenylene ether resins prepared by conventional procedures. These numbers represent averages of % OH values for polyphenylene ether resins having these IV values.

| IV | % OH |
|---|---|
| 0.45 | 0.076 |
| 0.4 | 0.09 |
| 0.35 | 0.11 |
| 0.3 | 0.14 |

The dried polyphenylene ether resin sample is dissolved in deuterated chloroform and the H-NMR spectra is recorded. The integrated signal between 6.68 to 6.32 ppm is compared to the integrated signal at 3.33 to 3.17 in order to calculate the percent of incorporated capping agent (expressed as the molecular weight of mesityl glycidolcyanurate (MGC)).

### Comparative Example A

Polyphenylene ether resin (PPO®) 5 g which had an intrinsic viscosity (IV) of 0.4 IV and 0.096% hydroxyl content (based on the weight of the PPO®) was dissolved in 20 g toluene at 55° C. in a well-stirred reactor. To this was added 0.25 g of a 10% toluene solution of Adogen 464 (tri-(C18-alkyl) methyl ammonium chloride), 2.5 g water and 0.09 g of a 29% aqueous NaOH solution. After adding the NaOH solution and agitating for 15 minutes, 0.61 g of a 31% solution of MGCC in toluene was added. The mix was stirred for 15 minutes, then the polymer was precipitated and washed with methanol and dried in a vacuum oven at 60° C. The residual (unreacted) hydroxyl content (by IR) and the weight percent of mesityl glycidolcyanurate (MGC) endcap (by HNMR) are listed in Table 1.

### Comparative Example B

PPO® (5 g) which had 0.4 IV and 0.096% hydroxyl was dissolved in 20 g toluene at 55° C, in a well-stirred reactor. To this was added 0.25 g of a 10% toluene solution of Adogen 464 (tri-(C18-alkyl) methyl ammonium chloride), 0.25 g dimethylbutylamine, 2.5 g water and 0.09 g of a 29% aqueous NaOH solution. After adding the NaOH solution and agitating for 15 minutes, 0.61 g of a 31% solution of MGCC in toluene was added. The mix was stirred for 15 minutes, then the polymer was precipitated and washed with methanol and dried in a vacuum oven at 60° C. The residual (unreacted) hydroxyl content (by IR) and the weight percent of mesityl glycidolcyanurate (MGC) endcap (by HNMR) are listed in Table 1.

### Example 1

A sample of PPO® in toluene (200 g of PPO® at 20 wt % concentration) obtained directly from a PPO® polymerization reactor, and containing 0.6% TMDQ, was heated at 90° C for 1.5 hours with 2.72 g of biphenol A (BPA). EDTA was added to complex the copper catalyst and the PPO® was precipitated and washed with methanol and dried in a vacuum oven to give a PPO® with 0.19% hydroxyl and 0.36 IV. The PPO® (5 g) sample with incorporated BPA was dissolved in 20 g at 55° C. in a well-stirred reactor. To this was added 0.25 g of a 10% toluene solution of Adogen 464 (tri-(C18-alkyl) methyl ammonium chloride), 2.5 g water and 0.09 g of a 29% aqueous NaOH solution. After adding the NaOH solution and agitating for 15 minutes, 0.61 g of a 31% solution of MGCC in toluene was added. The mix was stirred for 15 minutes, then the polymer was precipitated and washed with methanol and dried in a vacuum oven at 60° C. The residual hydroxyl content (by IR) and the weight percent of mesityl glycidolcyanurate (MGC) endcap (by HNMR) are listed in Table 1.

### Example 2

A sample of PPO® in toluene (200 g of PPO® at 20 wt % concentration) obtained directly from a PPO® polymerization reactor, and containing 0.6% TMDQ, was heated at 90° C for 1.5 hours with 3 g of TMDQ. EDTA was added to complex the copper catalyst and the PPO® was precipitated and washed with methanol and dried in a vacuum oven to give a PPO® with 0.19% hydroxyl and 0.34 IV. The PPO® (5 g) sample with extra incorporated TMDQ was dissolved in 20 g toluene at 55° C in a well-stirred reactor. To this was added 0.25 g of a 10% toluene solution of Adogen 464 (tri-(C18-alkyl) methyl ammonium chloride), 2.5 g water and 0.09 g of a 29% aqueous NaOH solution. After adding the NaOH solution and agitating for 15 minutes, 0.61 g of a 31% solution of MGCC in toluene was added. The mix was stirred for 15 minutes, then the polymer was precipitated and washed with methanol and dried in a vacuum oven at 60° C. The residual hydroxyl content (by IR) and the weight percent of mesityl glycidolcyanurate (MGC) endcap (by HNMR) are listed in Table 1.

### Example 3

PPO® (10 g) with 0.4 IV and 0.1% hydroxyl was dissolved in 40 g toluene and heated at 70°C for 5 hours with 0.12 g p,p'-biphenol and 0.05 g TMDQ. The PPO® was precipitated and dried to give a PPO® with 0.18% hydroxyl and 0.33 IV. The PPO® (5 g) sample with incorporated p, p'-biphenol was dissolved in 20 g toluene at 55 °C in a well-stirred reactor. To this was added 0.25 g of a 10% toluene solution of Adogen 464 (tri-(C18-alkyl) methyl ammonium chloride), 2.5 g water and 0.09 g of a 29% aqueous NaOH solution. After adding the NaOH solution and agitating for 15 minutes, 0.61 g of a 31% solution of MGCC in toluene was added. The mix was stirred for 15 minutes, then the polymer was precipitated and washed with methanol and dried in a vacuum oven at 60°C. The residual hydroxyl content (by IR) and the weight percent of mesityl glycidolcyanurate (MGC) endcap (by HNMR) are listed in Table 1.

**Table 1**

| Analytical Results of Capping Restrictions | | | |
|---|---|---|---|
| Table | Weight % Hydroxyl | Weight % Mesityl glycidolcyanurate | gm-moles/100 gms PPO® |
| Example A | 0.01 | 1.54 | .00547 |
| Example B | 0.018 | 1.49 | .00529 |
| Example 1 | 0.084 | 2.47 | .00855 |
| Example 2 | 0.07 | 2.47 | .00855 |
| Example 3 | 0.077 | 1.90 | .00677 |

### Comparative Example C

PPO® sample (5 g) which had 0.4 IV and 0.1% hydroxyl was dissolved in 20 g toluene at 60°C in a well-stirred reactor. To this was added 0.1 g of a 10% toluene solution of Adogen 464 (tri-(C18-alkyl) methyl ammonium chloride), and 0.46 g of a 5.9% aqueous NaOH solution. After 15 minutes of agitation post addition of the NaOH solution was added 0.25 g of a 28% solution of MGCC in toluene. The mix was stirred for 30 minutes, then the polymer was precipitated and washed with methanol and dried in a vacuum oven at 60° C. The residual hydroxyl content (by IR) and the weight percent of mesityl glycidolcyanurate (MGC) endcap (by HNMR) are listed in Table 2.

### Example 4

A PPO® polymerization run (P900917) was made in a 20 gallon reactor by adding all of the 2,6-xylenol at the start of the reaction. After the molecular weight build stage of the polymerization was completed, the oxygen flow to the reactor was replaced with nitrogen and the by-product TMDQ was reacted with the PPO® at 65°C. After precipitation with methanol and drying the PPO® had 0.44 IV and 0.14% hydroxyl content. A PPO® made under the same conditions except that the monomer was added slowly during the exotherm (molecular weight build) stage of the polymerization gives a polymer which contains only 0.085% hydroxyl with a 0.44 IV. The high hydroxyl PPO® sample (5 g) was dissolved in 20 g toluene at 60°C in a well-stirred reactor. To this was added 0.1 g of a 10% toluene solution of Adogen 464 (tri-(C18-alkyl) methyl ammonium chloride), and 0.46 g of a 5.9% aqueous NaOH solution. After 15 minutes of agitation post addition of the NaOH solution was added 0.25 g of a 28% solution of MGCC in toluene. The mix was stirred for 30 minutes, then the polymer was precipitated and washed with methanol and dried in a vacuum oven at 60°C. The residual hydroxyl content (by IR) and the weight percent of mesityl glycidolcyanurate endcap (by HNMR) are listed in Table 2.

### Example 5

The high hydroxyl PPO® sample (5 g of P900917) was dissolved in 20 g toluene at 70°C in a well-stirred reactor. To this was added 0.1 g of a 10% toluene solution of Adogen 464 (tri-(C18-alkyl) methyl ammonium chloride), and 0.66 g of a 5.9% aqueous NaOH solution. After 15 minutes of agitation post addition of the NaOH solution was added 0.35 g of a 28% solution of MGCC in toluene. The mix was stirred for 30 minutes, then the polymer was precipitated and washed with methanol and dried in a vacuum oven at 60°C. The residual hydroxyl content (by IR) and the weight percent of mesityl glycidolcyanurate (MGC) endcap (by HNMR) are listed in Table 2.

**Table 2**

| Analytical Results of Capping Reactions | | | |
|---|---|---|---|
| Sample | Weight % Hydroxyl | Weight % Mesityl glycidolcyanurate | gm-moles/100 gms PPO® |
| Example C | 0.01 | 1.50 | .00532 |
| Example 4 | 0.03 | 1.93 | .00688 |
| Example 5 | 0.016 | 2.91 | .0105 |

### Comparative Example D

A toluene solution of PPO® (P901005) obtained from a polymerization reaction where the monomer was added slowly during the exotherm stage of the polymerization was added to a well-stirred vessel and was kept at 60°C. The solution contained 136 kilograms of PPO® at a 25% concentration and contained 0.52% dimethylbutylamine (a component of the polymerization catalyst). A sample of PPO® isolated from the solution had 0.38 IV and 0.1% hydroxyl. To this vessel was added 0.57 kilograms of Adogen, 45.4 kilograms of water and 1.44 kilograms of a 50% aqueous NaOH solution. This mix was stirred for 15 minutes and 6.8 kilograms of a 25% toluene solution of MGCC was added. After 30 minutes, the PPO® was precipitated and washed with methanol and dried. The analytical results are listed in Table 3.

### Comparative Example E

A toluene solution of PPO® (P900822) obtained from a polymerization reaction where the monomer was added slowly during the exotherm stage of the polymerization was added to a well stirred vessel and was kept at 60°C. The solution contained 136 kilograms of PPO® at a 26% concentration and contained 0.45% dimethylbutylamine (a component of the polymerization catalyst). A sample of PPO® isolated from the solution had 0.4 IV and 0.1% hydroxyl. To this vessel was added 0.57 kilograms of Adogen, 45.4 kilograms of water and 1.44 kilograms of a 50% aqueous NaOH solution. This mix was stirred for 15 minutes and 6.8 kilograms of a 25% toluene solution of MGCC was added. After 30 minutes, the PPO® was precipitated and washed with methanol and dried. The analytical results are listed in Table 3.

### Example 6

Several batches of PPO® were made in the 20 gallon pilot plant polymerization reactor by adding all the monomer at first and after the completing the polymerization, reacting the by-product TMDQ with the polymer under nitrogen at 65°C. The batches were mixed to give a polymer solution (P900928) which contained 136 kilograms of PPO®. The PPO® was not precipitated with methanol before reacting with MGCC. The solution contained 22% PPO and 0.51% dimethylbutylamine, A sample of PPO isolated from the solution had 0.36 IV and 0.14% hydroxyl. The solution was put into a well stirred vessel and kept at 60°C. To this vessel was added 0.57 kilograms of Adogen, 45.4 kilograms of water and 1.44 kilograms of an 50% aqueous NaOH solution. This mix was stirred for 15 minutes and 6.8 kilograms of a 25% toluene solution of MGCC was added. After 30 minutes, the PPO® was precipitated and washed with methanol and dried. The analytical results are listed in Table 3.

**Table 3**

| Analytical Results of Capping Reactions | | | |
|---|---|---|---|
| Sample | Weight % Hydroxyl | Weight % Mesityl glycidolcyanurate | gm-moles/100 gms PPO® |
| Example D | 0.01 | 1.18 | .00418 |
| Example E | 0.012 | 0.90 | .00318 |
| Example 6 | 0.015 | 1.90 | .00677 |

As can be seen from the foregoing Examples, the processes according to the present invention yield polyphenylene ether resins having increased hydroxyl content at a given IV (or molecular weight). These polyphenylene ether resins having increased hydroxyl content show increased reactivity with end capping agents, and particularly with MGCC which, as explained above, tends not to react well with Mannich hydroxyl groups, but does react well with non-Mannich hydroxyl groups such as are incorporated into the polyphenylene ether resin accorded to the processes of the present invention.

The following Comparative Example F and Example 7 show that in blends of polyphenylene ether resin and polyester resin, the increased amount of MGCC incorporated into the polyphenylene ether resin as MGC-capped polyphenylene other resin yields polyphenylene ether resin/polyester resin blends which have improved impact properties.

It has been found that when the MGC content of capped polyphenylene ether resin drops below about 1% (.00353 gm-moles/100 gms PPO®), the impact properties of such polyphenylene ether resins with polyester resin are unsatisfactory. When the MGC content of the capped polyphenylene ether resin is between about 1% and about 1.5% (.00532 gm-moles/100 gms PPO®), blends of such polyphenylene ether resins with polyester resins have impact properties which are variable in nature, i.e. sometimes good and sometimes poor. The exact reason for this variability is not presently understood. However, when the MGC content of the capped polyphenylene ether resin is greater than about 1.6% (.00569 gm-moles/100 gms PPO®), blends of such polyphenylene ether resins with polyester resin consistently show good to excellent impact properties. Preferably, MGC content of the capped polyphenylene ether resins is about 1.9% (.00677 gm-moles/100 gms PPO®) or greater and, preferably, is about 2.5% (.00897 gm-moles/100 gms PPO®) or greater, all percents being based upon the weight of the polyphenylene ether resin.

### Comparative Example F and Example 7

Polybutylene terephthalate (PBT) blends were made on a 53 mm WP extruder with P900928 (1.90% MGC, from Example 6) as Example 7 and P900822 (0.9% MGC, from Example E) as Example F. The blends contained 20 parts capped PPO®, 60 parts PBT, 10 parts Finaprene 401 (a styrene-butadiene block copolymer), 10 parts Finaclear 520 (a styrene-butadiene block copolymer), 0.2 parts Irganox 1010 and 0.2 parts Seenox 412S. As can be seen from Table 4, the impact properties of the blends drop when the MGC content of the capped PPO® sample drops. Capped PPO® produced from PPO® obtained from the normal commercial process and having 0.09% MGC level in PPO® are only marginal in impact properties. Capped PPO samples produced as taught by this invention show good impact properties.

**Table 4**

| Impact Properties of PPO-PBT Blends | | |
|---|---|---|
| Sample | Izod Impact 23°C | (ft-lb/in) -29°C |
| Example F | 2.0 | 2.1 |
| Example 7 | 17.7 | 3.6 |

Obviously, other modifications and changes can be made to the present invention in light of the detailed description above. All such changes and modifications are intended to be within the scope of the appended claims.

All of the above-mentioned patents or patent applications are hereby incorporated by reference in their entireties.

## Claims

1. A method for preparing polyphenylene ether resin having increased hydroxyl content wherein the polyphenylene ether resin is polymerized by the oxidative coupling of at least one monohydroxyaromatic compound in solution, said method comprising:
(a) adding all of the monohydroxyaromatic compound at the start of the polymerization;
(b) polymerizing the monohydroxyaromatic compound to substantial completion in the presence of a source of oxygen to form polyphenylene ether;
(c) replacing the source of oxygen with nitrogen; and
(d) reacting the polyphenylene ether with biphenol-containing by-products of the reaction under conditions which incorporate the biphenol-containing by-products into the polyphenylene ether.

2. A method for preparing polyphenylene ether resin having increased hydroxyl content wherein the polyphenylene ether resin is polymerized by the oxidative coupling of at least one monohydroxyaromatic compound in solution, said method comprising:
(a) adding biphenol to polyphenylene ether resin in solution; and
(b) catalytically reacting the biphenol with the polyphenylene ether resin in solution.

3. Polyphenylene ether resin having an IV in the range of about .4-.45 and a hydroxyl content of greater than 0.1%.

4. Polyphenylene ether resin having an IV in the range of about 0.36-0.39 and a hydroxyl content of greater than 0.12%.

5. Polyphenylene ether resin having and IV in the range of about 0.3-0.35 and a hydroxyl content of greater than 0.15%.

6. Epoxy triazine end-capped polyphenylene ether resin wherein the epoxy triazine is present in an amount of at least about 1.6% by weight, based on the weight of the polyphenylene ether resin.

7. A composition comprised of:
(a) polyester resin; and
(b) polyphenylene ether resin, wherein the polyphenylene ether resin is end-capped with epoxy triazine in an amount of greater than about 1.6% by weight, based upon the weight of polyphenylene ether resin.

8. A method for increasing the epoxy triazine content in epoxy triazine end-capped polyphenylene ether resin, said method comprising:
(a) preparing polyphenylene ether having increased non-Mannich hydroxyl content; and
(b) reacting the polyphenylene ether from step (a) with hydroxyl-reactive epoxy triazine-containing compound.

9. Epoxy triazine end-capped polyphenylene ether resin wherein the epoxy triazine is present in an amount of at least about .00569 gm-moles/100 gm polyphenylene ether resin.

10. A composition comprised of:
(a) polyester resin; and
(b) polyphenylene ether resin, wherein the polyphenylene ether resin is end-capped with epoxy triazine in an amount of greater than about .00569 gm-moles/100 gm polyphenylene ether resin.
